# EUROPEAN PATENT SPECIFICATION

(11) **EP 1 969 596 B1**
(45) Date of publication and mention of the grant of the patent: **13.10.2010**
(21) Application number: 07709933.1
(22) Date of filing: 03.01.2007
(51) Int. Cl.: G11B 17/04

(54) **TABLET-STYLE DVD VIEWER**
TABLETTARTIGER DVD-APSPIELER
LECTEUR DE DVD DE TYPE TABLETTE

(30) Priority: 04.01.2006 US 755765 P
(43) Date of publication of application: 17.09.2008
(73) Proprietor: Coby Electronics Corporation, Maspeth NY 11378 (US)
(72) Inventor: LEE, Johann, Maspeth, NY 11378 (US)
(74) Representative: Gervasi, Gemma
(86) International application number: PCT/US2007/060064
(87) International publication number: WO 2007/079485

(56) References cited:
- EP-A- 1 498 807
- US-A- 6 044 473
- US-A1- 2001 055 071
- US-A1- 2002 181 722
- US-A1- 2003 011 973
- US-A1- 2003 222 848
- US-A1- 2004 155 861
- US-A1- 2005 041 171
- US-A1- 2005 053 365
- US-A1- 2005 088 405
- US-A1- 2005 259 523
- US-B1- 6 243 819
- US-B1- 6 704 495

## Description

### FIELD OF THE INVENTION

This invention relates to a DVD combination playing and viewing device comprising a pivotable and rotatable display. In particular, the invention relates to a DVD viewer having a display protected in the closed position and viewable in an open position occupying the same space in each position.

### BACKGROUND OF THE INVENTION

Display screens are in wide use in the electronics industry. In portable devices that include such displays, it is particularly important to protect the surface of the screen from wear. This protection has been accomplished by providing a protective cover for the display or by configuring the display such that it folds into the electronic device, for example, by pivoting the display, e.g., on a laptop or a similarly configured foldable DVD viewer, to close the device with the displays face adjacent to keyboard. A disadvantage of a device like this is that in order for the display to be viewable, the device must be in an open position. In the open position, the display is positioned at an angle with respect to the base of the unit and thus the device, in the open position, occupies substantially more space than when closed. Disadvantages of a separate protective cover include either that the cover is a separate piece that can get lost, that the cover itself can become damaged resulting in distorted or unviewable portions of the images coming from the display, and that the cover requires additional space. A disadvantage of the latter solution is that the device in open form occupies twice the amount of space.

Notebook computers that have a pivotable and rotatable display used to ensure that others around a table can read from the display, are known. Examples of US patents describing such feature are US 6,912,122 to Chen et al. and US 6,804,861 to Hsu. However, the rotatable character of the display does not solve the problem of the large space occupied by the device when the device is open.

US patent application US2001/0055071 describes a DVD reader having a DVD holding station and a pivotable and rotatable display attached to the reader, the display can be moved between a protected position and a viewing position such that the DVD holding station and the display occupy the same space in both positions.

### SUMMARY OF THE INVENTION

It is an object of the present invention to provide a DVD combination playing and viewing device with a protected screen mode and at least one viewing mode, which can occupy essentially the same space when in either mode and that does not require separate screen protecting parts, and in which the DVD may be in a secure stable position.

It is a further object of the invention to provide a DVD playing and viewing device with beneficial properties as apparent from the description below.

The above objects are achieved by means of a device according to the subject-matter of claim 1. Further advantageous aspects are defined in the dependent claims. The DVD reader may include a DVD holding station, the cover of the DVD holding station being at the site of the DVD reader to which the display can be fixed.

When not in use, the device can be put in a protected screen mode, i.e. with the display viewing surface pivoted such that the front of the display viewing surface is in contact with and facing the top side of the DVD reader. When in one viewing mode, the device can have the back surface of the display in contact with the top side of the DVD reader. In this way, the display is backwards fixable to the DVD reader. In the latter position, the user can watch the DVD playing on the screen with a device that occupies essentially the same space as in the protected screen mode. In both positions, the DVD is stably fitted in the DVD reader, having a protected cover secured between the display and the DVD reader.

Thus, in one respect, an exemplary embodiment of a device according to the present invention may comprise a DVD reader, the DVD reader comprising a DVD holding station, the cover of the DVD holding station being at the site of the DVD reader to which the display can be affixed, and a pivotable and rotatable display attached to said reader, wherein the display may be pivoted between a protected screen mode and a viewing mode wherein the reader and display occupy essentially the same space in both modes.

In another respect, the exemplary embodiment may be a combination playing and viewing device, comprising a DVD reader, the DVD reader comprising a DVD holding station, a cover of the DVD holding station being at the site of the DVD reader to which the display can be affixed, and a pivotable and rotatable display attached to said reader, wherein the display may be pivoted between a protected screen mode and a viewing mode in which the reader and display occupy essentially the same space in both modes.

These and other aspects and advantages will become apparent to those of ordinary skill in the art by reading the following detailed description, with reference where appropriate to the accompanying drawings. Further, it should be understood that the foregoing summary is merely exemplary and is not intended to limit the scope of the invention as claimed.

### BRIEF DESCRIPTION OF THE DRAWINGS

The foregoing aspects and many of the attendant advantages of this invention are more readily appreciated as the same become better understood by reference to the following detailed description, when taken in conjunction with the accompanying drawings, wherein:
FIGURE 1 is a view of an embodiment of the device in protected screen mode.
FIGURE 2 is a top view of an embodiment of the device in protected screen mode.
FIGURE 3 is a side view of an embodiment of the device in protected screen mode.
FIGURE 4 is a side view of an embodiment of the device in protected screen mode.
FIGURE 5 is a side view an embodiment of the device in protected screen mode.
FIGURE 6 is a side view an embodiment of the device in protected screen mode.
FIGURE 7 is a bottom view of an embodiment of the device.
FIGURE 8 is a view of the device when pivoted open from the protected screen mode.
FIGURE 9 is a view of the device when the screen is rotated approximately 60 degrees.
FIGURE 10 is a view of the device when the screen is rotated 180 degrees and is beginning to be pivoted into viewing mode.
FIGURE 11 is a view of the device when the screen is backward fixed, i.e. in viewing mode.

### DETAILED DESCRIPTION OF THE PREFERRED EMBODIMENTS

In the detailed description of the figures, like reference numerals denote like elements in the figures.

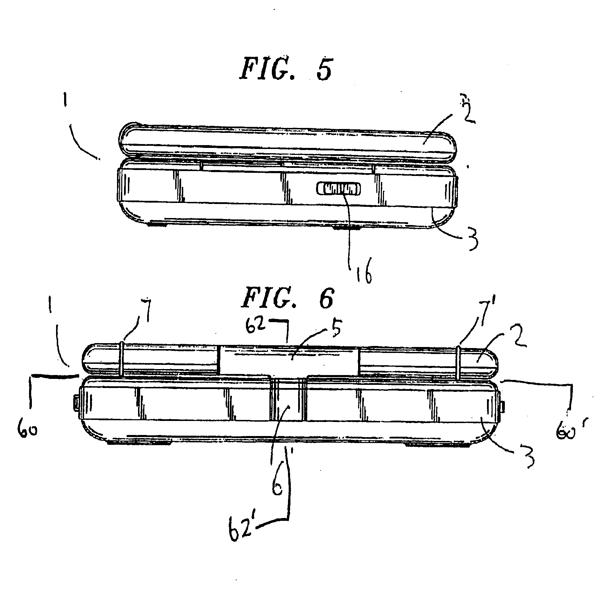

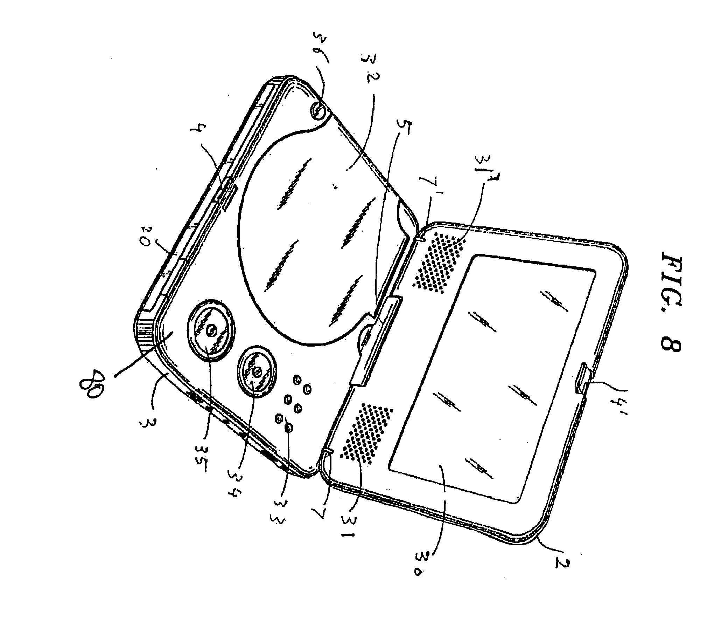

Pivotable, pivot, pivoting etc, refer to the ability of the display of the device to revolve about an axis parallel to the plane of the top surface 80 seen in FIG 8 illustrating a DVD reader according to an exemplary embodiment of the present invention. In other words when viewing FIG 6, pivotable refers to the ability of the display 2 to revolve about line 60 to 60'.

Rotatable refers to the ability of the display 2 to revolve about an axis perpendicular to the plane of the top surface 80 of the DVD reader. In other words when viewing FIG 6, rotatable refers to the ability of the display 2 to revolve about line 62 to 62'.

Unlike other DVD players that open similarly to a laptop computer where the display face is pivoted up and open from a protected screen mode for a viewing mode, an embodiment of the present invention comprises a DVD player that occupies essentially the same space when in a protected screen mode and when in a viewing mode. This may be accomplished by pivoting the display of the DVD player up, rotating it 180 degrees and then pivoting the display down so that the rear face of the display is placed in contact with the top surface of the DVD reader. This viewing angle allows for a minimal use of space while keeping the largest screen viewing area and may be referred to as a tablet or backwards fixed viewing mode.

The DVD player has a viewing mode in which the screen is pivoted but not rotated or backward fixed. It should be understood that in addition to the viewing mode in which the screen is backwards fixed or in tablet viewing mode, the DVD player may also be viewed throughout the full range of pivoting and rotating as long as the screen is in a position to be viewed.

It will be understood, however, to one skilled in the art, that the present invention may be practiced without some of the specific details. In other instances, well known process operations and devices have not been described in detail in order not to unnecessarily obscure the present invention.

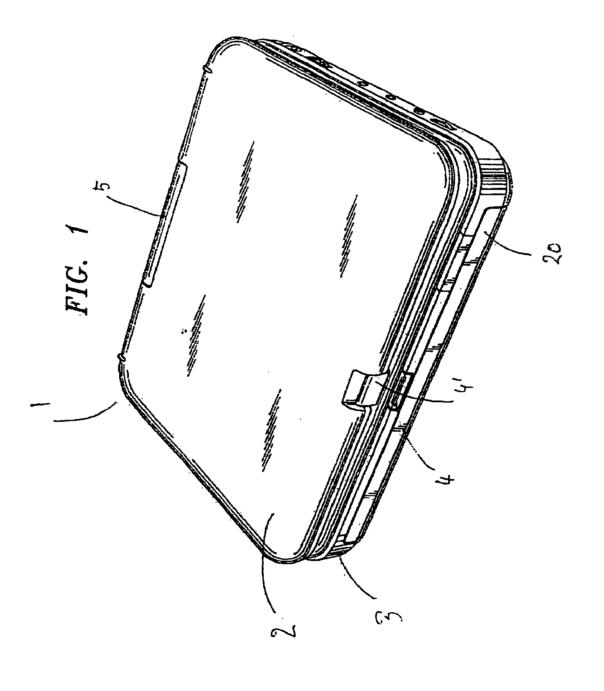

FIG 1 illustrates an embodiment of the device in the protected screen mode having a display 2 and a DVD reader 3. The device may be made of any plastic, metal or otherwise similar or suitable material or combination of materials. Closure component 4 may receive closure component 4' to hold the DVD player in a protected screen mode. Actuation of the closure components 4 and 4' enables the display to be pivoted open and rotated. The closure component may be a push, slide, flip, pull, twist, press, latch, or otherwise activated closure component. At the back of the display, a pivot mechanism 5 facilitates opening of the display. The pivot mechanism may be any mechanism that performs or supports the performance a pivoting action.

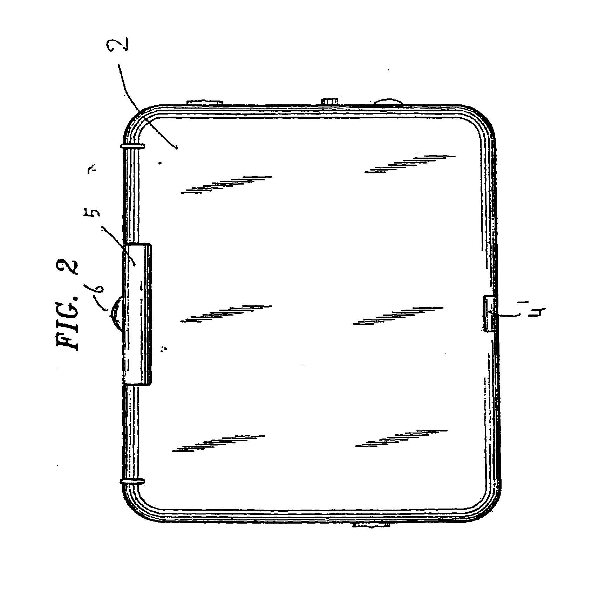

FIG 2 is a top view of the device, further showing rotating mechanism 6 on a pivot mechanism 5. Rotating mechanism 6 is what allows the display 2 to rotate about the DVD reader 3. The rotating mechanism 6 may be any commercially available mechanism that rotates or facilitates rotating. The rotating mechanism 6 and pivot mechanism 5 are preferably metal and covered with a plastic housing.

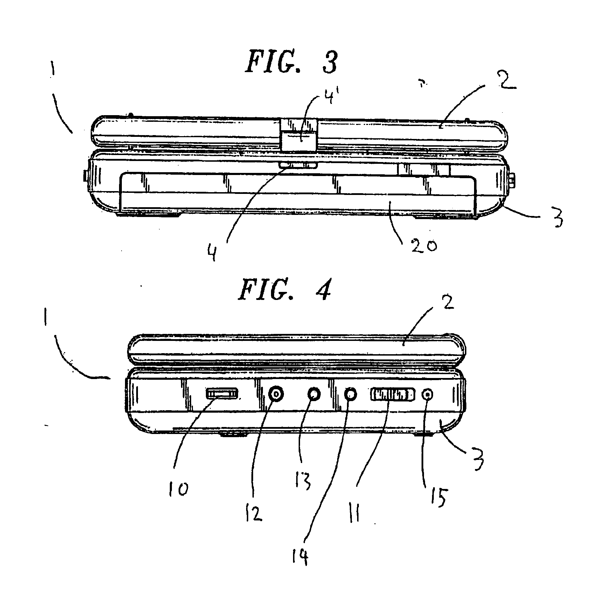

FIG 3 is a side view of the device showing battery 20. The battery may be any commercially available and suitable battery used in such electronic devices. It is preferably a rechargeable battery such as, but not limited to, lithium ion battery. In an alternative embodiment, the device may also be powered using an AC wall adapter or a battery pack or any other power source.

In an embodiment in which rechargeable batteries are used, the rechargeable batteries may be recharged any time the device is connected to an external power source. The device may also charge the batteries, and receive power, if a mechanism implementing Universal Serial Bus (USB), FireWire, or other such interface standards are connected thereto. In an embodiment in which rechargeable batteries are used, the batteries should be of a capacity such that, if the device is disconnected from the external power source when the batteries are fully charged, the device can be powered for several consecutive hours without needing to be recharged.

FIG 4 is a side view, further showing a control 10 to adjust the volume. The volume control 10 may be a tuning scale or any other control that would achieve the same result. For example, it may be a button or a touch-pad. Also in Figure 4 is a headphone jack 12, optical audio/video jacks 13 and 14 and a power adaptor interface 15. Control 11 provides switching for audio/video jacks 13 and 14 between input and output modes.

FIG 5 is a side view, further illustrating power switch 16. This switch may also be a vertical switch, or a push button switch, or any other similar switch. It may also be a button or any other suitable apparatus. Although the power switch can be used to turn the device on and off, the device may ignore attempts to turn it on when the device is closed. The device may also automatically power off when closed. These features can help prevent draining the batteries when the device is not in use.

FIG 6 is a back side view further illustrating the pivoting mechanism 5 and the rotating mechanism 6. Protection members 7 and 7' protect the reader if the screen is rotated. The protection members may be made of plastic, rubber, silicone, or any other suitable material. They are preferably present to provide a space, padding, or cushion so that the display 2 and the DVD reader 3 do not damage or scratch each other by close contact or otherwise; the protection members also serve to absorb any shock that is generated when the display 2 is folded down toward the DVD reader.

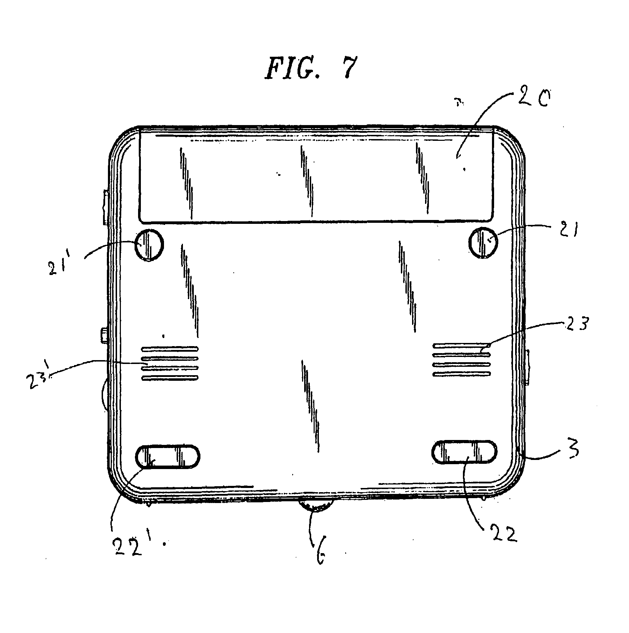

FIG 7 is a bottom view of the device, showing the battery 20, feet 21, 21', 22 and 22', on which the device stands safely on, for example, a table. The feet may be made of plastic, metal, rubber, silicone, fabric, or any other similar and suitable material. They may be any size in diameter, although it is preferable that the feet are not too large, about ½-1 inch in diameter. Slits 23 and 23' provide openings through which fresh air can be circulated in the device to cool the electrical circuits.

FIG 8 illustrates the device in a traditional open form with the screen 30 and speakers 31 and 31' as part of the display 2. There may alternatively be different speakers and a different quantity of speakers than what is shown in FIG 8. The screen may be any liquid crystal display ("LCD"), plasma, or any other suitable screen. The display may opened by pivoting it about the pivot mechanism 5. Also pictured in FIG 8 is a DVD reader 3. The DVD reader 3 comprises a DVD holding station, which may utilize commercially available DVD reading technology to read the DVDs.

The DVD reader may include any features known to those of skill in the art for providing audio and/or video playback from DVD's, CD's, CDr's, CDRW's or other similar digital media. Examples of these features may be: over 500 horizontal lines of crystal clear picture, compatibility with NTSC/PAL system, multiple subtitles/viewing angles, slow/fast motion play, zoom operation, parental lock control, and 100-240 V automatic power adjustable input. The DVD reader may be made by inserting off-the-shelf-components including DVD readers and various related processors and controllers.

Cover 32 is also shown in FIG 8, the cover being on the top side of the reader. The protective cover 32 can be opened by pushing an opening controller 36, but it is preferable that it not be opened from the side surfaces This has as an advantage that when in a backwards fixed position (or a viewing mode), or in a closed position (protected screen mode), accidental ejection of a disc in the reader is not possible. Further the top of the reader has controls 33, 34, and 35 for controlling the DVD, such as starting to play, finding the right track, adjusting the screen color and brightness, moving forward, backwards, fast forwarding, rewinding, holding, volume, etc. The controls may be for example touch keys as in keys 33 or turn and touch keys as keys 34 and 35. The controls may also be of any other similarly effective nature and configuration, such as touch pads, knobs, switches, tuning scales, for example.

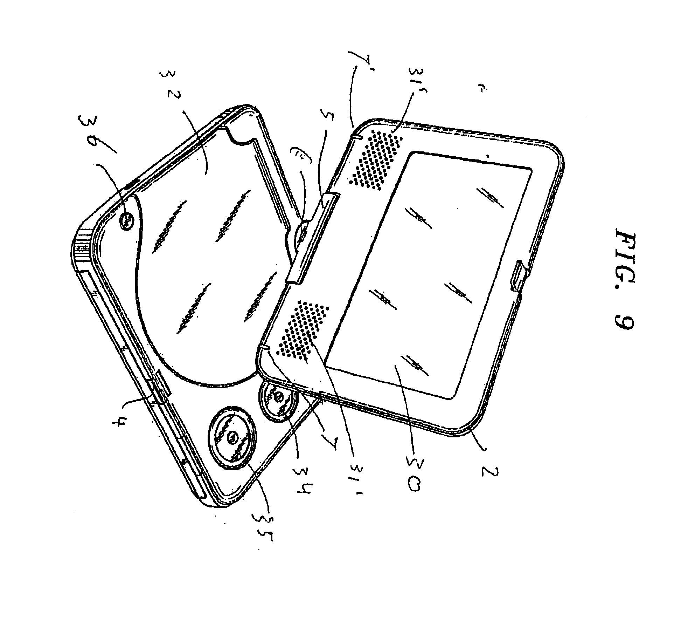

FIG 9 shows the display 2 partially rotated according to an exemplary embodiment of the present invention. The rotation of display 2 as shown in FIG 9 is facilitated by rotating mechanism 6, described above with reference to FIG 2. In the exemplary embodiment, the display rotates 180 degrees. It is preferable that the display 2 be rotated clock-wise, horizontally about 180 degrees and then pivoted back 90 degrees across a vertical axis. The pivoting mechanism 5 facilitates the pivoting of display 2 vertically, and preferably spans 180 degrees.

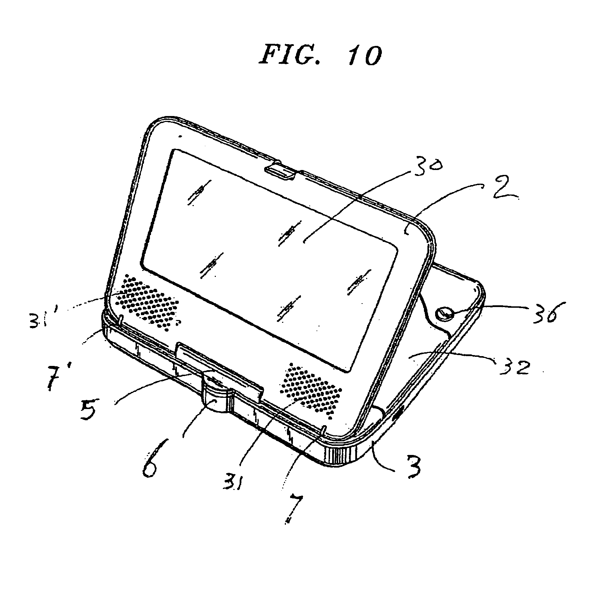

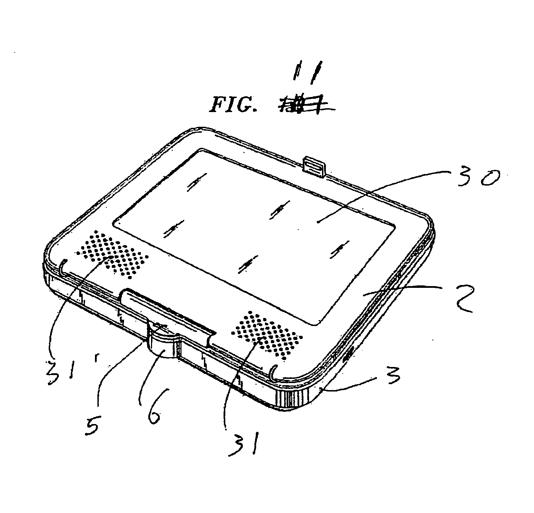

FIG 10 shows the display 2 rotated 180 degrees and partially pivoted according to an exemplary embodiment of the present invention. FIG 10 shows the display approaching a backwards fixed position. FIG. 11 shows the display in a backwards fixed position according to an exemplary embodiment of the present invention.

An exemplary embodiment of the present invention has been described above. Those skilled in the art will understand, however, that changes and modifications may be made to this embodiment without departing from the true scope of the present invention, which is defined by the claims.

## Claims

1. A device comprising:
a DVD reader (3), the DVD reader (3) comprising a DVD holding station accessible via a top surface of the DVD reader (3);
a display (2) attached to said reader (3) in a way to be pivotable about a first axis and rotatable about a second axis, wherein the display (2) may be pivoted between a protected mode and a viewing mode such that the reader (3) and display (2) occupy essentially the same space in both modes;
at least one protection member (7) attached to the pivotable and rotatable display (2), wherein the at least one protection member (7) provides padding between the display (2) and the DVD reader (3) when the display is in said protected mode or in said viewing mode and when the display is being rotated about said second axis, such that the display (2) and DVD reader (3) do not scratch each other; and
wherein the top surface of the DVD reader (3) comprises a control (36) to eject a DVD, said control (36) to eject a DVD being inaccessible when the display is in either the protected mode or the viewing mode.

2. A device according to claim 1 wherein the display (2) has one or more speakers (31 and 31') on a display face of the device.

3. A device according to claim 1 wherein the top surface of the DVD reader (3) comprises controls (33, 34, and 35) for controlling the playback of a DVD.

4. A device according to claim 1 wherein the position of the display (2) in the protected mode and the viewing mode is such that the DVD holding station is inaccessible.

5. A device according to claim 1 wherein the DVD reader (3) comprises a protective cover (32) that can be opened or closed in order to control access to the DVD holding station.

6. A device according to claim 1, wherein the display (2) comprises a screen (30) having a size of about 35-70% of the surface area of the viewing side of the display (2).

7. A device according to claim 1, wherein a side of the DVD reader (3) comprises a jack (15) for connecting to a power supply.

8. A device according to claim 1, wherein a side of the DVD reader (3) comprises one or more jacks (13 and 14) for audio/video input and/or output.

9. A device according to claim 1, further comprising a power switch (16), wherein the power control does not function to turn the device on when the device is in the protected mode.

10. A device according to claim 1 wherein the device automatically powers off when the device is placed in the protected mode.

11. A device according to claim 5 wherein the control (36) to eject a DVD operates to open the protective cover (32).

12. A device according to claim 9 wherein the power control (16) can be placed in a hold state.

13. A device according to claim 5 wherein a side of the DVD reader (3) comprises controls (10) for controlling the volume of DVD playback.

14. A device according to claim 1 wherein a side of the DVD reader (3) comprises a connection (12) for head phones.

## Patentansprüche

1. Vorrichtung, die umfasst:
einen DVD-Abspieler (3), wobei der DVD-Abspieler (3) eine DVD-Haltestation umfasst, die über eine Oberseite des DVD-Abspielers (3) zugänglich ist,
eine Anzeige (2), die in der Weise an dem genannten Abspieler (3) befestigt ist, dass sie um eine erste Achse schwenkbar ist und um eine zweite Achse drehbar ist, wobei die Anzeige (2) zwischen einer geschützten Betriebsart und einer Betrachtungsbetriebsart geschwenkt werden kann, sodass der Abspieler (3) und die Anzeige (2) in beiden Betriebsarten im Wesentlichen denselben Platz belegen;
wenigstens ein Schutzelement (7), das an der schwenkbaren und drehbaren Anzeige (2) befestigt ist, wobei das wenigstens eine Schutzelement (7) zwischen der Anzeige (2) und dem DVD-Abspieler (3) eine Abfederung bereitstellt, wenn die Anzeige in der genannten geschützten Betriebsart oder in der genannten Betrachtungsbetriebsart ist und wenn die Anzeige um die zweite Achse gedreht worden ist, sodass die Anzeige (2) und der DVD-Abspieler (3) einander nicht kratzen; und
wobei die Oberseite des DVD-Abspielers (3) eine Steuerung (36) zum Ausstoßen einer DVD umfasst, wobei die genannte Steuerung (36) zum Ausstoßen einer DVD unzugänglich ist, wenn die Anzeige entweder in der geschützten Betriebsart oder in der Betrachtungsbetriebsart ist.

2. Vorrichtung gemäß Anspruch 1, bei der die Anzeige (2) an einer Anzeigefläche der Vorrichtung einen oder mehrere Lautsprecher (31 und 31') aufweist.

3. Vorrichtung gemäß Anspruch 1, bei der die Oberseite des DVD-Abspielers (3) Steuerungen (33, 34 und 35) zum Steuern der Wiedergabe einer DVD umfasst.

4. Vorrichtung gemäß Anspruch 1, bei der die Stellung der Anzeige (2) in der geschützten Betriebsart und in der Betrachtungsbetriebsart derart ist, dass die DVD-Haltestation unzugänglich ist.

5. Vorrichtung gemäß Anspruch 1, bei der der DVD-Abspieler (3) eine Schutzabdeckung (32) umfasst, die geöffnet oder geschlossen werden kann, um den Zugang zu der DVD-Haltestation zu steuern.

6. Vorrichtung gemäß Anspruch 1, bei der die Anzeige (2) einen Bildschirm (30) mit einer Größe von etwa 35-70 % des Flächeninhalts der Betrachtungsseite der Anzeige (2) umfasst.

7. Vorrichtung gemäß Anspruch 1, bei der eine Seite des DVD-Abspielers (3) eine Buchse (15) zum Verbinden mit einer Leistungsversorgung umfasst.

8. Vorrichtung gemäß Anspruch 1, bei der eine Seite des DVD-Abspielers (3) eine oder mehrere Buchsen (13 und 14) für die Audio/Video-Eingabe und/oder -Ausgabe umfasst.

9. Vorrichtung gemäß Anspruch 1, die ferner einen Leistungsschalter (16) umfasst, wobei die Leistungssteuerung nicht zum Einschalten der Vorrichtung fungiert, wenn die Vorrichtung in der geschützten Betriebsart ist.

10. Vorrichtung gemäß Anspruch 1, bei der die Vorrichtung automatisch abschaltet, wenn die Vorrichtung in die geschützte Betriebsart versetzt wird.

11. Vorrichtung gemäß Anspruch 5, bei der die Steuerung (36) zum Ausstoßen einer DVD zum Öffnen der Schutzabdeckung (32) arbeitet.

12. Vorrichtung gemäß Anspruch 9, bei der die Leistungssteuerung (16) in einen Haltezustand versetzt werden kann.

13. Vorrichtung gemäß Anspruch 5, bei der eine Seite des DVD-Abspielers (3) Steuerungen (10) zum Steuern der Lautstärke der DVD-Wiedergabe umfasst.

14. Vorrichtung gemäß Anspruch 1, bei der eine Seite des DVD-Abspielers (3) eine Verbindung (12) für Ohrhörer umfasst.

## Revendications

1. Dispositif, comprenant :
un lecteur de DVD (3), le lecteur de DVD (3) comprenant un poste de retenue de DVD accessible par l'intermédiaire d'une surface supérieure du lecteur de DVD (3) ;
un affichage (2) fixé audit lecteur (3) de manière à pouvoir pivoter autour d'un premier axe et à pouvoir tourner autour d'un second axe, dans lequel l'affichage (2) peut pivoter entre un mode protégé et un mode de visionnement de sorte que le lecteur (3) et l'affichage (2) occupent essentiellement le même espace dans les deux modes ;
au moins un élément de protection (7) fixé à l'affichage pouvant pivoter et tourner (2), dans lequel l'au moins un élément de protection (7) fournit un rembourrage entre l'affichage (2) et le lecteur de DVD (3) lorsque l'affichage est dans ledit mode protégé ou dans ledit mode de visionnement et lorsque l'affichage est tourné autour dudit second axe, de sorte que l'affichage (2) et le lecteur de DVD (3) ne se rayent ; et
dans lequel la surface supérieure du lecteur de DVD (3) comprend une commande (36) pour éjecter un DVD, ladite commande (36) pour éjecter un DVD étant inaccessible lorsque l'affichage est dans le mode protégé ou dans le mode de visionnement.

2. Dispositif selon la revendication 1, dans lequel l'affichage (2) comporte un ou plusieurs haut-parleurs (31 et 31') sur une face affichage du dispositif.

3. Dispositif selon la revendication 1, dans lequel la surface supérieure du lecteur de DVD (3) comprend des commandes (33, 34 et 35) pour commander la lecture d'un DVD.

4. Dispositif selon la revendication ,1 dans lequel la position de l'affichage (2) dans le mode protégé et le mode de visionnement est telle que le poste de retenue de DVD soit inaccessible.

5. Dispositif selon la revendication 1, dans lequel le lecteur de DVD (3) comprend un couvercle de protection (32) qui peut être ouvert ou fermé afin de contrôler l'accès au poste de retenue de DVD.

6. Dispositif selon la revendication 1, dans lequel l'affichage (2) comprend un écran (30) possédant une taille d'environ 35 à 70 % de la superficie du côté de visionnement de l'affichage (2).

7. Dispositif selon la revendication 1, dans lequel un côté du lecteur de DVD (3) comprend un connecteur femelle (15) pour la connexion à une alimentation électrique.

8. Dispositif selon la revendication 1, dans lequel un côté du lecteur de DVD (3) comprend un ou plusieurs connecteur femelles (13 et 14) pour l'entrée et/ou la sortie audio/vidéo.

9. Dispositif selon la revendication 1, comprenant en outre un interrupteur électrique (16), dans lequel la commande électrique ne fonctionne pas pour allumer le dispositif lorsque le dispositif est dans le mode protégé.

10. Dispositif selon la revendication 1, dans lequel le dispositif s'éteint automatiquement lorsque le dispositif est placé dans le mode protégé.

11. Dispositif selon la revendication 5, dans lequel la commande (36) pour éjecter un DVD fonctionne pour ouvrir le couvercle de protection (32).

12. Dispositif selon la revendication 9, dans lequel la commande électrique (16) peut être placée dans un état de maintien.

13. Dispositif selon la revendication 5, dans lequel un côté du lecteur de DVD (3) comprend des commandes (10) pour commander le volume de la lecture de DVD.

14. Dispositif selon la revendication 1, dans lequel un côté du lecteur de DVD (3) comprend une connexion (12) pour un casque.
